Europäisches Patentamt

European Patent Office

Office européen des brevets

(11) Publication number: **0 167 527**
**B1**

# (12) EUROPEAN PATENT SPECIFICATION

(45) Date of publication of patent specification: 29.03.89

(51) Int. Cl.⁴: **B 01 D 39/20**, F 01 N 3/02

(21) Application number: 84900577.2

(22) Date of filing: 27.12.83

(86) International application number:
PCT/US83/02041

(87) International publication number:
WO 85/02784 04.07.85 Gazette 85/15

(54) **APPARATUS FOR PERIODICALLY OXIDIZING PARTICULATES COLLECTED FROM EXHAUST GASES.**

(43) Date of publication of application:
15.01.86 Bulletin 86/03

(45) Publication of the grant of the patent:
29.03.89 Bulletin 89/13

(84) Designated Contracting States:
DE FR GB

(56) References cited:
US-A-2 898 202
US-A-3 719 457
US-A-3 779 015
US-A-3 852 042
US-A-4 322 387
US-A-4 326 378
US-A-4 383 411
US-A-4 404 795
US-A-4 416 674

(73) Proprietor: FORD MOTOR COMPANY LIMITED
Eagle Way
Brentwood Essex CM13 3BW (GB)
(84) GB

(73) Proprietor: FORD-WERKE
AKTIENGESELLSCHAFT
Ottoplatz 2 Postfach 21 03 69
D-5000 Köln 21 (DE)
(84) DE

(73) Proprietor: FORD FRANCE SOCIETE ANONYME
344 Avenue Napoléon Bonaparte B.P. 307
F-92506 Rueil Malmaison Cedex (FR)
(84) FR

(72) Inventor: RAO, Vemulapalli, Durga, Nageswar
5255 Clarendon Crest
Bloomfield Township, MI 48013 (US)
Inventor: WADE, Wallace, R.
34156 Glouster Circle
Farmington Hills, MI 48018 (US)

(74) Representative: Messulam, Alec Moses et al
A. Messulam & Co. 24 Broadway
Leigh on Sea Essex SS9 1BN (GB)

Courier Press, Leamington Spa, England.

## Description

The invention relates to the technology of regenerating a particulate trap used to remove particulates from the exhaust gases of an automotive internal combustion engine and, more particularly, to apparatus for more effectively heating the particulates using an electrical heating assembly.

Particulate emissions from an engine can be reduced with a particulate filter trap and a regeneration system to periodically clean the filter trap of particulates by incineration. Generally, durable and acceptable filters for particulate traps have been developed by the art which have included wire mesh (see U.S. patent 3,499,269) and, more advantageously, rigid ceramics preferably in a honeycomb monolithic cellular wall structure (see U.S. patents 4,276,071, 4,329,162 and 4,340,403).

Systems of regeneration, developed by the state of the art using filters, may now be categorised as; (a) electrical heating, (b) hydrocarbon fuel fed burners, (c) catalyst impregnated traps, and (d) engine throttling. Each of the regeneration systems rely upon a heated gas to ignite the collection of particulates within the trap. The heated gas can be (1) the exhaust gas raised in temperature by high engine throttling or hydrocarbon fuel augmentation, or (2) an independent air flow raised to a high temperature by electrical heaters or fuel fed burners.

One of the problems common to all of the above regeneration systems, and associated with the use of a heated gas to ignite particulates, is the temperature gradient created in the filter trap as the result of burning of the particulate collection. As burning proceeds along the length of the filter trap, the exothermic reaction creates a continuously increasing temperature at the central core of the filter while the outer radial region of the filter trap maintains a lower temperature due to a temperature loss from radiation and conduction through the filter trap housing. It is possible to reach core temperatures that result in some destruction of the cellular or mesh filter structure.

Regeneration by electrical heating appears to be most advantageous because it offers promise of reliability and simplicity. It can be carried out under any vehicle operating condition with a minimum increase in fuel economy and without affecting emission content at the outlet of the automotive exhaust system (see use by prior art in U.S. patent 4,270,936; 4,276,066; and 4,319,896). However, these electrical regeneration systems of the prior art rely upon an unmodified flow of exhaust gas to act as the heat transfer medium between the heater elements and the particulates. The flow creates too large a mass to be quickly heated by the elements without use of oversized heating elements and without detrimental loss of energy through radiation. The heated exhaust gas intersects the filter trap in such a manner to often create detrimental temperature gradients. As a result, electrical power consumption is high and inefficient.

U.S.-A-4,383,411 is directed to a diesel engine exhaust cleaner and burner system including at least one exhaust cleaner member with a filter positioned therein to effect removal of particulates from exhaust gases delivered thereto via an inlet manifold. A fuel burner supplied with fuel by a fuel nozzle in operatively associated with the inlet manifold to supply heat to effect incineration of particulates collected in the filter. A cyclone duct providing a vortex chamber therein is operatively positioned downstream of the fuel nozzle and supplied with air to effect combustion of the fuel and incineration of the particulates. U.S.-A-4,322,387 is directed to a filter apparatus for filtering combustion particles from an exhaust gas stream and for periodically rejuvenating the filter bed. The apparatus includes a casing defining an elongated reaction chamber including a filter media and having an elongated inlet port to communicate with a source of exhaust gas, a catalyst bed disposed at the upstream end of the reaction chamber, a heater element positioned in said inlet port and injector means communicated with a source of fuel and having a nozzle which open into said inlet port at a point downstream of the heater element. The apparatus further includes a gas diffuser adjacent to said catalyst bed and having a downstream end communicated with said inlet port to receive heated exhaust gas.

What is needed is a regeneration system for an automotive filter trap that has an electrical heating assembly which (a) avoids destructive temperature gradients in the filter trap during regeneration, and (b) achieves quicker regeneration through electrical means with less energy losses.

According to the present invention, there is provided a filter trap regenerating apparatus in combination with a filter trap (10, 11) for collecting particulates from the exhaust gas of an internal combustion engine, said apparatus comprising means (50) for providing a flow of an oxygen carrying heat transfer medium through said filter trap and electrical resistance heating means (21) disposed up stream of said filter trap for heating the heat transfer medium to a temperature effective to ignite at least one portion of said particulates to permit incineration of the remainder of said particulates, characterised in that said apparatus includes a flow mask (22) disposed in said flow of heat transfer medium, upstream from said heating means (21), arranged to divert the heat transfer medium away from the radially inner zone of said filter trap to engage and ignite particulates along a radially outer zone of the filter trap.

Preferably, the mask is a circular disc and spaced upstream from the heating means a distance of about 1.27-3.81 cms (.5-1.5 inches) and effective to mask about 30-45% of the flow of heat transfer medium at the radially inner zone.

To improve the effectiveness of the means for heating the heat transfer medium, an improved electrical resistance element configuration and orientation may be preferably employed. This is obtained by arranging the electrical resistance elements in one or more planar coil configurations, the planes of the coils extending transversely across the flow of the heat transfer medium, optimally with no spacing between the resistance elements, in the radially outer region of the configuration being greater than 1.27-1.91 cms (.5-.75 inch). The improved heat transfer is also achieved by additionally employing a flow diffuser and/or radiation reflector. The diffuser and/or reflector may advantageously be comprised of foraminous plates arranged in series with the openings of adjacent plates nonaligned with respect to the direction of flow, causing the flow of heat transfer medium to follow a devious course in permeating the plates. The plates are effective to promote slower and more diffused flow of the heat transfer medium as the flow engages the electrical resistance elements, thereby promoting more effective heat transfer. The diffuser may additionally be comprised of a coating providing for heat or radiation reflection, thereby limiting energy losses from the heating means in a direction aligned with the flow. Lastly the means for heating the heat transfer medium may additionally comprise a member for depressing the temperature required to ignite the particulate collection. Preferably, such member may comprise a catalysed wire mesh located adjacent the front face of the particulate collection in the filter, whereby the presence of the catalytic material at such location induces a lower ignition temperature of the particulates.

The invention will now be described further, by way of example, with reference to the accompanying drawings, in which:

Figure 1 is a schematic diagram of an automotive filter trap and regeneration system embodying the principles of this invention;

Figure 2 is an enlarged central sectional view of a leading portion of the filter trap and the heating means employed to heat the heat transfer medium conveyed through the filter trap;

Figure 2a is a greatly enlarged portion of a part of the apparatus shown in Figure 2;

Figure 3 is a view similar to that of Figure 2 illustrating the progressive temperature gradient that is developed as a result of the use of the mask forming part of this invention;

Figure 4 is a view similar to Figure 3 illustrating a progressive temperature gradient that is developed as a result of the absence of a mask; and

Figure 5 is a view taken substantially along line 5-5 of Figure 1 illustrating the planar configuration orientation of the resistance heating elements.

The regeneration system utilizes an electric heating assembly that heats a flow of air passing therethrough, which heated air in turn ignites the front face of the particulate collection in the filter trap. The air flow is slowed, diffused, and is masked by means stationed in the radially inner zone of the flow; the flow is guided to engage resistance elements concentrated more heavily in the radially outer zone and to ignite the radially outer zone of the particulate collection. Ignition temperature depressing means is stationed adjacent the particulate collection in the filter trap to further facilitate ease of oxidation. Ignition at the radially outer zone promotes a more uniform temperature gradient across and throughout the particulate collection as it is oxidized.

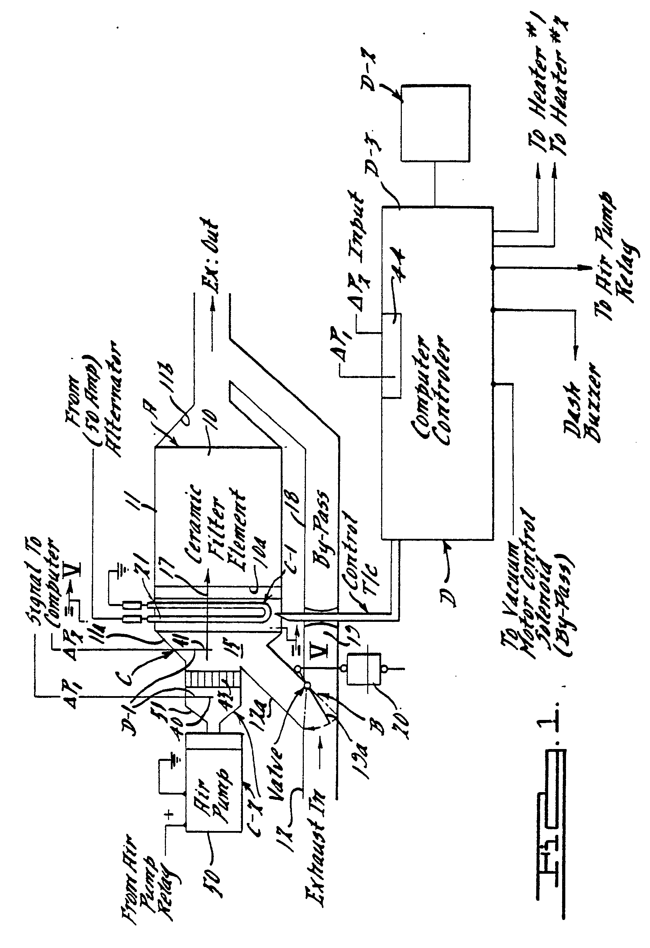

As shown in Figure 1, an apparatus for regenerating a filter trap A, used to collect particulates from the exhaust gas of an internal combustion engine, comprises essentially an exhaust flow diverting means B, a heating means C which has a heating element assembly C-1 and a means for providing a heat transfer medium C-2 and, control means D which includes an initiator D-1, electrical power source D-2, and an electronic control box and timer D-3.

Filter Trap

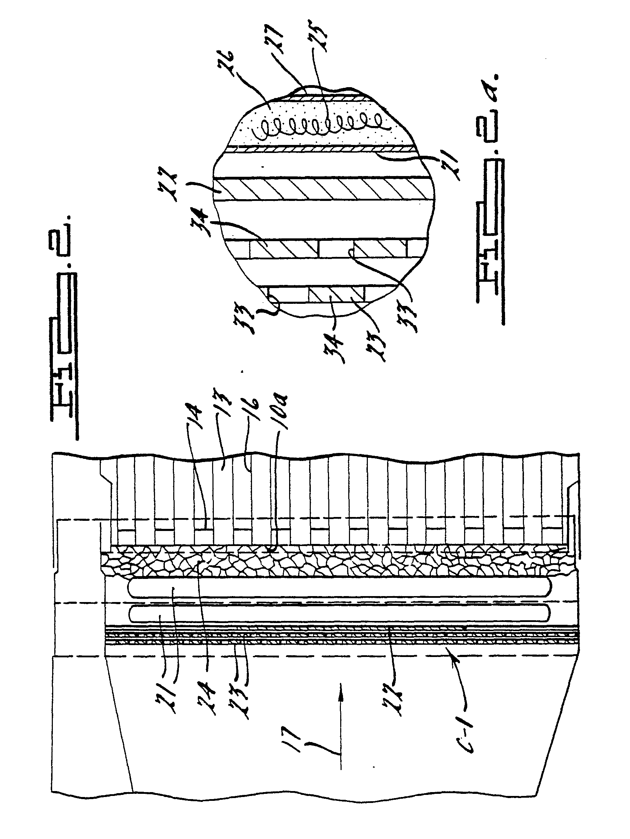

The filter trap A has a monolithic ceramic honeycomb cell structure 10 supported and contained in a metallic housing 11, the front portion of the housing 11a guiding the flow of exhaust gases from channel 12 (through channel 12a to the front face 10a of the monolith). The monolithic ceramic honeycomb cell structure may be similar to that used for carrying a catalyst material for conversion of gases from a gasoline engine. The monolithic structure contains parallel aligned channels 13 (as shown in Figure 2) constituting the honeycomb cell structure. The ends of the channels are alternately blocked with high temperature ceramic cement at the front 14 and the rear so that all of the inlet flow gas must pass through the porous side walls 16 of the channels 13 before exiting through a rear opened channel of the filter trap. This type of monolithic ceramic structure provides very high filtration surface area per unit of volume. For example, a 1950 cubic centimetres (119 cubic inch) filter trap of this type with 100 cells per square inch and .043 cm (.017 inch) wall thickness will provide approximately $1.27 \times 10^4$ square centimetres (1870 square inches) of filtering surface area, and the filtering surface area per unit volume for such a filter trap would be about 6.53 square centimetres (16.6 square inches per cubic inch). The channels are all preferably aligned with the direction of the flow 17 through the trap. When the particulates collect on the trap they will nest within the porosity of the walls which are spaced along the direction of flow. Thus, there can be a generally uniform distribution of particulates collected along the length of the trap. Preferably the monolithic structure has an oval cross-section with a large frontal face 10a of 155-213 square centimetres (24-33 square inches) the axes of the oval preferably have a dimension of 10-12.5 centimetres and 17.5-20 centimetres (4-5 inches and 7-8 inches), respectively.

## Exhaust Flow Diverting Means

As shown in Figure 1, the exhaust flow diverting means B comprises a bypass channel 18 defined here as a conduit effective to carry the exhaust gases around the filter trap A. The exhaust flow in channel 12 is diverted from communicating with the frontal interior 15 of the filter trap housing by a diverter valve assembly 19, the diverter valve may be a flapper type valve 19a actuated by a vacuum motor control 20 to move the valve from a normally biased position, closing off communication with the bypass channel 18, to an actuated position where the valve closes off communication with the frontal interior space 15 of the filter trap housing. The vacuum motor 20 is electrically actuated under the control of control means D.

## Heating Means

As shown in Figure 2, the heating element assembly C-1 comprises essentially one or more electrical resistance elements 21, a flow mask 22 upstream from the resistance elements, a diffuser and/or reflector 23 upstream from the mask, and an ignition temperature depressing means 24 stationed adjacent the frontal face 10a of the filter trap.

The electrical resistance elements 21 preferably comprise sheathed nickel chromium wire elements 25, the resistance elements being encased within magnesium oxide powder 26 contained by the sheath 27. The elements are sized to have a resistance heating capacity sufficient to raise the temperature of a low flow of heat transfer medium to a temperature of about 593°C (1100°F) within a period of 1.5-3.5 minutes. The heating element surface temperature should usually reach 760°C (1400°F) to bring this about. The elements are characterized by the ability to heat with an electrical input to the resistance elements of 800-1750 watts, a current supply of 20-80 volts, and each element has a resistance of about 2.4 ohms.

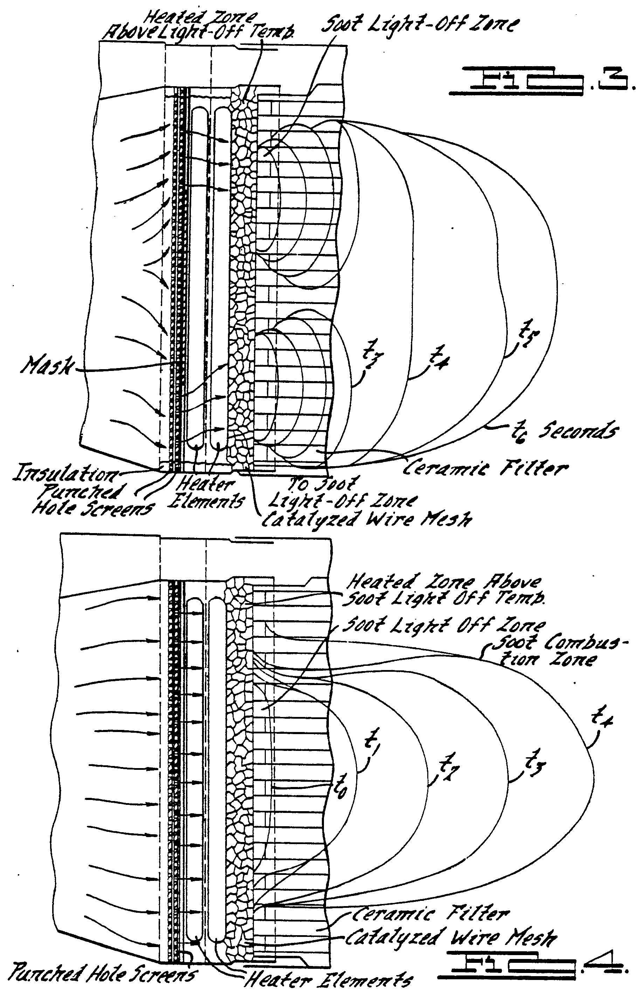

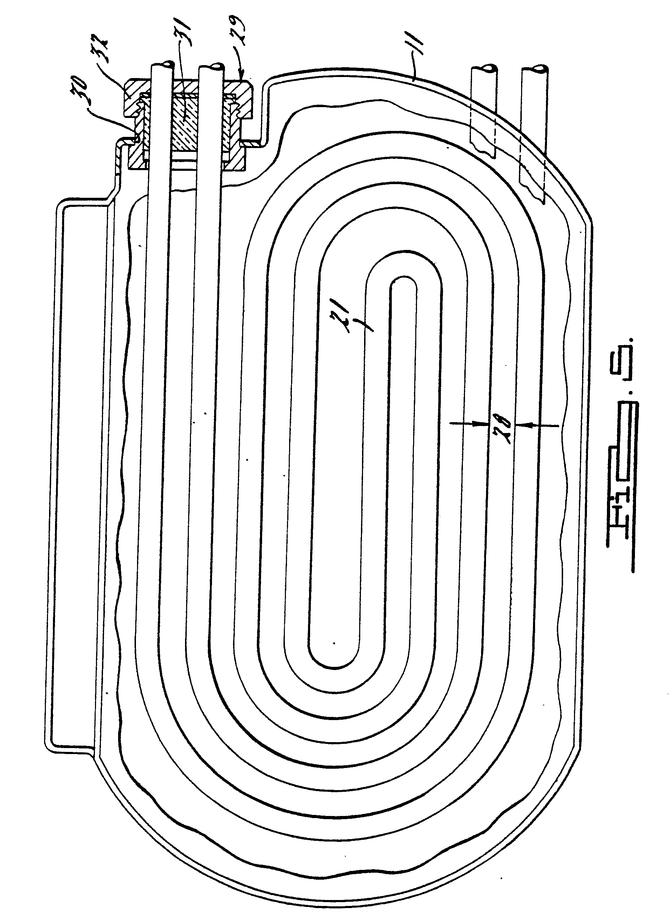

Each of the electrical resistance elements may be preferably configured as a spiral, contained in a common plane extending transversely across the direction of flow of the heat transfer medium, as shown in Figure 5. The spacing 28 between the flattened sheathed heating coils is preferably no greater than 1.27-1.91 cm (.5-.75 inch) in the radially outer region of the configuration. The configured heating elements are supported in a secure position by ceramic holding sleeve assembly 29 received in an opening 30 in the metallic housing wall 11; the assembly has a ceramic sleeve 31 contained in a split ceramic felt casing 32 bearing against the metallic housing wall 11.

The flow mask 22 is preferably comprised of a flat metallic disc of heat resistant alloy such as Inconel 600 (a trademark of International Nickel Company) or 304 stainless steel. The disc should have a thickness of .06-.15 cm (.025-.06 inch), sufficient to resist deflection within the type of flow to be experienced, and should be stationed upstream from the heating elements a distance 1.27-3.81 cm (.5-1.5 inches) sufficient to be capable of controlling the flow of heat transfer medium. The function of the mask is to divert the heat transfer medium away from such radially inner zone of the filter trap while guiding the heat transfer medium to engage and ignite the collection of particulates along a radially outer region of the filter trap.

Without the use of such a mask, a heat transfer medium heated to an incineration temperature to ignite the frontal face of the particulate collection will promote a temperature gradient in the filter trap, as shown in Figure 4. As the burning proceeds along the length of the particulate collection device within the filter trap, the exothermic reaction creates a continuously increasing temperature gradient at the central core of the filter while the outer radial regions of the filter trap would retain a lower temperature. Under these conditions it is possible to reach core temperatures that result in destruction of the cellular or mesh filter structure.

With the use of the mask (see Figure 3), the heat transfer medium engages the front face of the particulate collection device along a toroid or ring at the radially outer region of the particulate collection. The disc has a surface area effective to mask about 30-45% of the flow of the heat transfer medium at the radially inner zone, The ignited toroidal portion of the particulate collection then progressively proceeds both radially inwardly as well as along the length of the particulate collection device, allowing the temperature gradient to be more uniform across the entire section of the filter trap and thereby avoiding extremely high and unwanted core temperatures.

The diffuser 23 is a series of foraminous plates arranged in close spaced relationship immediately upstream of the mask, such spacing being in the range of .36-1.27 cm (.15-.5 inch). The foraminous plates have a plurality of openings 33 therein, usually of the diameter of about .17-.31 cm (.065-.125 inch), and spaced apart about .2-.4 cm (.08-.16 inch), facilitating an open flow area in each plate of about 30-60%. The plates are arranged so that the openings provide no line of sight aligned with the direction of flow 17. This requires that the openings be offset with respect to the openings of an adjacent plate. In this manner, the flow is forced to be diverted and diffused, requiring a slowing down and promotion of greater heat transfer during engagement of the flow with the heating elements.

The plates of the diffuser may perform an additional function, reflection of the radiant heat of the heating elements. Such radiation may escape in a direction aligned with the flow. The plates are coated at side 34 with a material comprised of a thin layer of zirconia (.002 inch thick), the material being sufficient to reflect radiation and function under the environment of the regeneration system.

The ignition temperature depressing means 24 may preferably comprise a catalyzed wire mesh formed into a blanket extending transversely across the flow 17 of heat transfer medium and is stationed immediately adjacent and in front of the particulate collection of the filter trap. The wire mesh may be a woven material having a strand thickness of about 3-5 mils and the catalyst coating preferably should be of a low sulphate active catalyst material such as gamma·A1$_2$O$_3$·CeO$_2$ wash with Pt$^2$Rh precious metal impregnated in it. Alternatively, the surface of the wire mesh, woven from 3-5 mil diameter Inconel 600 alloy wire, is oxidized by exposing to 871-962°C (1600-1800) for 10 minutes in still air and dipped in a solution of platinic chloride. The mesh is then heated to 593°C (1100°F) to decompose the platinic chloride to the oxide of platinum which becomes an active catalyst. This treatment eliminates the need for the gamma·A1$_2$O$_3$·CeO$_2$ washcoat for supporting the catalyst.

The presence of the catalytic material carried on the wire mesh operates to induce a lower ignition temperature of the particulates at the filter face. The catalyzed wire mesh must provide an open flow area greater than 70% to enable the heat transfer medium to flow relatively unimpeded therethrough. The catalyzed wire mesh also functions to collect hydrocarbon soot during the exhaust gas filtration cycle, which soot acts as a match to ignite the particulates in the filter trap.

The Control Means D

The initiator D-1 of the electrical control means D is comprised of two pressure sensor/transducers 40 and 41, sensor/transducer 41 being located to sense the back pressure immediately upstream of the front of the filter trap, which pressure corrolates with the degree of particulate collection in the filter or contamination thereof. The other sensor/transducer 40 is placed in an open channel ceramic honeycomb structure 43 located considerably upstream from the filter itself. The open channel structure 43 contains a porosity which is much larger than the filter trap itself so that none of the particulates will become entrapped within the open channel honeycomb ceramic. The pressure sensor 40 of the pressure/transducer is located in the honeycomb structure to sense the pressure, simulating a clean filter trap. The sensor/transducers 40 and 41 are each of a capacitance type with a measurable voltage output that is a function of the sensed back pressure. The voltage output is conveyed to an electronic comparator device 44 contained within the control box D-3. The two voltage signals are ratioed in the comparator device 44; when the ratio exceeds a predetermined set maximum, an electrical signal is then relayed within the control to initiate the entire regeneration or oxidizing cycle.

Monitoring the reference pressure drop across the open channel ceramic honeycomb structure 43 will always provide a signal proportional to the clean trap pressure drop for the instantaneous exhaust flow rate. Dividing the actual trap pressure drop by a constant, multiplied by the reference pressure drop, will provide an electrical signal proportional to the trap loading and which is independent of engine speed, engine load, and exhaust temperature. Thus, when the trap loading is greater than the allowable limit, an electrical signal will be provided to start the oxidizing or regeneration process. The limit may be set at a ratio of the dirty trap voltage to the clean trap voltage of about 3:1 to 8:1.

The electric power source D-2 may be comprised of an automotive battery or, preferably, an unregulated electrical supply from an alternator driven by the engine of the automobile carrying the system.

The electronic control box and timer receives the signal from the comparator device 44 to actuate several timed electrical events in sequence. The timed events include: (1) actuating the vacuum motor 20 to operate the bypass valve substantially simultaneously with the closing of a circuit to energize the heating elements: (2) closing a circuit to energize air pump motor 50 to transmit a supply of air through conduit 1 to the frontal interior space 15 of the filter trap when the heating element has attained a surface temperature of 593°C (1100°F) (the actuation of the air pump motor typically will occur at approximately 2.5 minutes of elapsed time after heater element energization); (3) interrupting the supply of electrical current to the heating means after about half of the total oxidizing cycle time has elapsed; and (4) cessation of the blower means and deactivation of the diverter valve at either a stable self-sustained oxidation condition in the filter trap or at the completion of the full oxidizing cycle time.

Claims

1. A filter trap regenerating apparatus in combination with a filter trap (10, 11) for collecting particulates from the exhaust gas of an internal combustion engine, said apparatus comprising means (50) for providing a flow of an oxygen carrying heat transfer medium through said filter trap and electrical resistance heating means (21) disposed upstream of said filter trap for heating the heat transfer medium to a temperature effective to ignite at least one portion of said particulates to permit incineration of the remainder of said particulates, characterised in that said apparatus includes a flow mask (22) disposed in said flow of heat transfer medium, upstream from said heating means (21), arranged to divert the heat transfer medium away from the radially inner zone of said filter trap to engage and ignite particulates along a radially outer zone of the filter trap.

2. An apparatus as claimed in Claim 1, in which said flow mask is comprised of a circular disc positioned upstream from the heat means a distance of 1.27-3.81 cm (.5-1.5 inches).

3. An apparatus as claimed in Claim 2, in which said disc has a surface area effective to mask about 30-45% of the flow of heat transfer medium at the radially inner zone.

4. An apparatus as claimed in any one of Claims 1 to 3, in which said heating means, comprises resistance elements arranged in one or more planar coil configurations, said planes for the coils extending transversely across the flow of said heat transfer medium, the spacing between said coils in the radially outer region of said flow being no greater than 1.27-1.91 cm (.5-.75 inch).

5. An apparatus as claimed in any one of the preceding claims, including a flow diffuser arranged up stream of the flow mask to promote a slower more diffused flow of said heat transfer medium.

6. A apparatus as claimed in Claim 5, in which said flow diffuser is comprised of a plurality of foraminous plates extending transversely across said flow of heat transfer medium and being spaced from each other a distance within the range of .38-1.27 cm (.15-.50 inch).

7. An apparatus as claimed in Claim 6, in which said foraminous plates have the openings of adjacent plates nonaligned with respect to the direction of flow, causing said flow of heat transfer medium to follow a devious course in permeating said plates.

8. An apparatus as claimed in Claim 5, 6, and 7 in which said flow diffuser additionally has a coating of radiation reflective material to limit the radiation heating loss from the heating means.

9. An apparatus as claimed in any one of the preceding claims including an ignition temperature depressing member disposed between the filter trap and the heating means for lowering the ignition temperature of said particulates.

10. An apparatus as claimed in Claim 9, in which said ignition temperature depressing member comprises a catalytically coated wire mesh located adjacent the particulate collection.

**Patentansprüche**

1. A scheidefilterregeneriereinrichtung in Kombination mit einem Abscheidefilter (10, 11) zum Ausscheiden von Teilchen aus dem Abgas eines Verbrennungsmotors, wobei die genannte Einrichtung eine Vorrichtung (50) umfaßt, die für einen Strom aus sauerstoffhaltigem Wärmeträgermedium durch das genannte Abscheidefilter sorgt, und eine elektrische Widerstandsheizvorrichtung (21), die dem genannten Abscheidefilter vorgeschaltet ist, um das Wärmeträgermedium auf eine Temperatur zu erhitzen, die ausreicht, um zumindest einen Teil der genannten Teilchen zu zünden, um so eine Verbrennung des Restes der genannten Teilchen zu ermöglichen, dadurch gekennzeichnet, daß die genannte Einrichtung eine Strömungsmaske (22) umfaßt, die, der genannten Heizvorrichtung (21) vorgeschaltet, im genannten Strom des Wärmeträgermediums angeordnet ist, um das Wärmeträgermedium von der radialen Innenzone des genannten Abscheidefilters so abzulenken, daß es zu einer Berührung und Zündung der Teilchen an einer radialen Außenzone des Abscheidefilters entlang kommt.

2. Einrichtung gemäß Anspruch 1, wobei die genannte Strömungsmaske aus einer kreisförmigen Scheibe besteht, die in Strömungsrichtung mit einem Abstand von 1,27-3,81 cm (0,5-1,5″) vor der Heizvorrichtung angeordnet ist.

3. Einrichtung gemäß Anspruch 2, wobei die genannte Scheibe eine Oberfläche aufweist, die ausreicht, um etwa 30-45% des Wärmeträgermediumstroms an der radialen Innenzone abzudecken.

4. Einrichtung gemäß irgendeinem der Ansprüche 1 bis 3, wobei die genannte Heizvorrichtung Widerstandselemente umfaßt, die in einer oder mehreren Schlangenebenen angeordnet sind, wobei die genannten Ebenen der Schlangen quer zum Strom des genannten Wärmeträgermediums verlaufen, wobei der Abstand zwischen den genannten Schlangen im radialen Außenbereich des genannten Stroms nicht mehr als 1,27-1,91 cm (0,5-0,75″) beträgt.

5. Einrichtung gemäß irgendeinem der vorstehenden Ansprüche, umfassend einen Strömungsverteiler, der in Strömungsrichtung vor der Strömungsmaske angeordnet ist, um so einen langsameren verteilteren Strom des genannten Wärmeträgermediums zu bewirken.

6. Einrichtung gemäß Anspruch 5, wobei der genannte Strömungsverteiler aus einer Vielzahl von Lochblechen besteht, die quer zum genannten Strom des Wärmeträgermediums verlaufen und zueinander mit einem Abstand von etwa 0,38-1,27 cm (0,15-0,50″) angeordnet sind.

7. Einrichtung gemäß Anspruch 6, wobei die genannten Lochbleche Öffnungen aufweisen, die gegenüber angrenzenden Blechen im Verhältnis zur Strömungsrichtung nicht zueinander ausgerichtet sind, so daß der genannte Strom des Wärmeträgermediums beim Durchströmen der genannten Bleche einer Strömungsabweichung unterliegt.

8. Einrichtung gemäß Anspruch 5, 6 und 7, wobei der genannte Strömungsverteiler zusätzlich eine Beschichtung aus strahlungsreflektierendem Material aufweist, um den Strahlungswärmeverlust von der Heizvorrichtung zu begrenzen.

9. Einrichtung gemäß irgendeinem der vorstehenden Ansprüche, umfassend ein Zündtemperaturreduzierelement, das zwischen dem Abscheidefilter und der Heizvorrichtung angeordnet ist, um die Zündtemperatur der genannten Teilchen zu verringern.

10. Einrichtung gemäß Anspruch 9, wobei das genannte Zündtemperaturreduzierelement ein katalytisch beschichtetes Drahtgewebe umfaßt, das in der Nähe der Teilchenausscheidung angeordnet ist.

**Revendications**

1. Appareil de régénération de séparateur à filtre, combiné à un séparateur à filtre (10, 11) collectant des particules des gaz d'échappement d'un moteur à combustion interne, l'appareil comprenant un dispositif (50) destiné à former un courant d'un fluide de transfert de chaleur transportant de l'oxygène dans le séparateur à filtre et un dispositif (21) de chauffage par résistance électrique placé en amont du séparateur à filtre afin qu'il chauffe le fluide de transfert de chaleur à une température provoquant l'inflammation efficace d'une partie au moins des particules afin que le reste des particules puisse être incinéré, caractérisé en ce que l'appareil comporte un cache (22) disposé dans le courant du fluide de transfert de chaleur, en amont du dispositif de chauffage (21), et destiné à dévier le fluide de transfert de chaleur à distance de la zone radialement interne du séparateur à filtre afin que ce courant vienne au contact des particules placées le long d'une zone radialement externe du séparateur à filtre et les enflamme.

2. Appareil selon la revendication 1, dans lequel le cache est formé d'un disque circulaire placé en amont du dispositif de chauffage à une distance comprise entre 1,27 et 3,81 cm.

3. Appareil selon la revendication 2, dans lequel le disque a une surface cachant efficacement 30 à 45% environ de la section d'écoulement de fluide de transfert de chaleur dans la zone radialement interne.

4. Appareil selon l'une quelconque des revendications 1 à 3, dans lequel le dispositif de chauffage comporte des éléments de chauffage par résistance placés avec une ou plusieurs configurations de serpentins plans, les plans des serpentins étant transversaux au courant du fluide de transfert de chaleur, l'espacement des serpentins dans la région radialement externe du courant ne dépassant pas 1,27 à 1,91 cm.

5. Appareil selon l'une quelconque des revendications précédentes, comprenant un diffuseur placé en amont du cache et destiné à favoriser la formation d'un courant bien réparti et plus lent du fluide de transfert de chaleur.

6. Appareil selon la revendication 5, dans lequel le diffuseur est formé de plusieurs plaques perforées disposées transversalement au courant du fluide de transfert de chaleur et séparées les unes des autres par une distance comprise entre 0,38 et 1,27 cm.

7. Appareil selon la revendication 6, dans lequel les plaques perforées sont telles que les ouvertures des plaques adjacentes ne sont pas alignées dans la direction d'écoulement, si bien que le courant du fluide de transfert de chaleur suit un trajet sinueux lorsqu'il traverse les plaques.

8. Appareil selon la revendication 5, 6 et 7, dans lequel le diffuseur a en outre un revêtement d'un matériau réfléchissant le rayonnement afin que les pertes de chaleur provenant du dispositif de chauffage par rayonnement soient limitées.

9. Appareil selon l'une quelconque des revendications précédentes, comprenant un organe destiné à réduire la température d'inflammation, placé entre le séparateur à filtre et le dispositif de chauffage afin qu'il réduise la température d'inflammation des particules.

10. Appareil selon la revendication 9, dans lequel l'organe destiné à réduire la température d'inflammation est une toile métallique revêtue catalytiquement, placée près des particules collectées.

Fig. 1.

FIG.2.

FIG.2a.

FIG.3.

Heated Zone Above Light-Off Temp.

Soot Light-Off Zone

Mask

$t_3$  $t_4$  $t_5$

$t_6$ Seconds

Ceramic Filter

Insulation
Punched Hole Screens
Heater Elements
To Soot Light-Off Zone
Catalyzed Wire Mesh

FIG.4.

Heated Zone Above Soot Light Off Temp.

Soot Light Off Zone

Soot Combustion Zone

$t_4$

$t_1$  $t_2$  $t_3$

$t_0$

Ceramic Filter
Catalyzed Wire Mesh

Punched Hole Screens        Heater Elements

3

FIG. 5.

EP 0 167 527 B1